# EUROPEAN PATENT APPLICATION

(11) **EP 4 325 974 A1**
(43) Date of publication of application: **21.02.2024**
(21) Application number: 22819522.8
(22) Date of filing: 07.06.2022
(51) Int. Cl.: H04W 72/04

(54) **TRANSMISSION PROCESSING METHOD, TERMINAL AND NETWORK SIDE DEVICE**

(30) Priority: 07.06.2021 CN 202110633821
(71) Applicant: Vivo Mobile Communication Co., Ltd., Dongguan, Guangdong 523863 (CN)
(72) Inventor: YANG, Kun, Dongguan, Guangdong 523863 (CN); JIANG, Dajie, Dongguan, Guangdong 523863 (CN)
(74) Representative: Murgitroyd & Company
(86) International application number: PCT/CN2022/097394
(87) International publication number: WO 2022/257924

(57) **Abstract**

This application discloses a transmission processing method, a terminal and a network side device, and relates to the field of communication technologies. The method in embodiments of this application includes: determining, by a terminal, a first physical random access channel PRACH transmission occasion, where the first PRACH transmission occasion corresponds to analog beams of a wireless auxiliary device; and sending, by the terminal, a first message Msg1 on the first PRACH transmission occasion.

## Description

### CROSS-REFERENCE TO RELATED APPLICATION

This application claims the priority of Chinese Patent Application No. 202110633821.9 filed in China on June 7, 2021, the entire content of which is hereby incorporated by reference.

### TECHNICAL FIELD

This application relates to the field of communication technologies, and in particular, to a transmission processing method, a terminal and a network side device.

### BACKGROUND

An intelligent surface, such as a large intelligent surface (Large Intelligent Surface, LIS) or a reconfigurable intelligent surface (Reconfigurable Intelligent Surface, RIS), is an emerging type of artificial material equipment. Using the RIS as an example, the RIS may dynamically/semi-statically change its electromagnetic characteristics, thereby influencing a reflection/refraction behavior of an electromagnetic wave incident on the RIS. The RIS achieves functions such as beam scanning/beam forming by controlling a reflected/refracted wave of the electromagnetic wave.

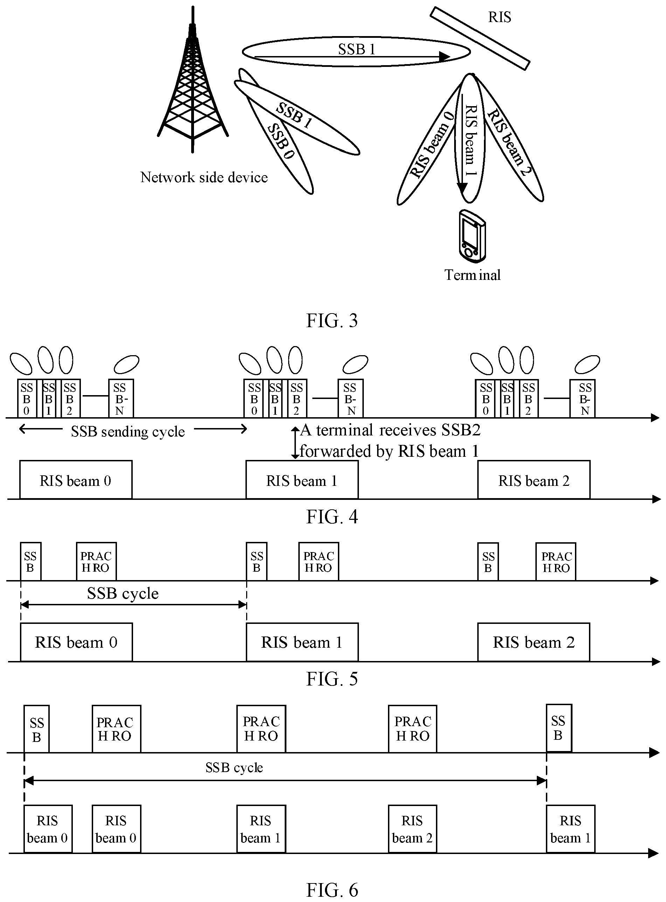

A future wireless network may deploy a large number of intelligent surfaces in place of intensive deployment of base stations. An intelligent surface uses an analog beam forwarding to forward a downlink signal of a base station to a terminal, and similarly, to forward an uplink signal of the terminal to the base station, as shown in FIG. 3. The intelligent surface may use a downlink synchronization signal of the base station for beam training, ensuring that the uplink signal may obtain corresponding gain during random access.

However, a time division multiplexing mode of the analog beam forwarding is adopted by the intelligent surface. Therefore, an available and effective random access channel (Random Access Channel, RACH) transmission occasion (Occasion) (RO) of the terminal is that reception of the downlink signal of the terminal is maximized when a synchronization signal and PBCH block (Synchronization Signal and PBCH block, SSB) beam points to the intelligent surface and a forwarded beam of the intelligent surface points to the terminal, as shown in FIG. 4. Similarly, an RO associated with the SSB beam also has the same requirement. Due to the time division multiplexing mode of the intelligent surface, an occurrence cycle of the effective RO is relatively long, leading to an increase in random access time.

### SUMMARY

Embodiments of this application provide a transmission processing method, a terminal and a network side device, which can solve a problem of increased delay in a random access process.

According to a first aspect, a transmission processing method is provided, including:
determining, by a terminal, a first physical random access channel PRACH transmission occasion, where the first PRACH transmission occasion corresponds to analog beams of a wireless auxiliary device; and
sending, by the terminal, a first message Msg1 on the first PRACH transmission occasion.

According to a second aspect, a transmission processing apparatus is provided, including:
a first determining module, configured to determine a first physical random access channel PRACH transmission occasion, where the first PRACH transmission occasion corresponds to analog beams of a wireless auxiliary device; and
a first sending module, configured to send a first message Msg1 on the first PRACH transmission occasion.

According to a third aspect, a transmission processing method is provided, including:
receiving, by a network side device, a Msg1 sent on a first PRACH transmission occasion, where
the first PRACH transmission occasion corresponds to analog beams of a wireless auxiliary device.

According to a fourth aspect, a transmission processing apparatus is provided, including:
a second receiving module, configured to receive a Msg1 sent on a first PRACH transmission occasion, where
the first PRACH transmission occasion corresponds to analog beams of a wireless auxiliary device.

According to a fifth aspect, a terminal is provided, including a processor, a memory, and a program or instructions stored in the memory and executable on the processor, where when the program or instructions are executed by the processor, steps of the method according to the first aspect are implemented.

According to a sixth aspect, a terminal is provided, including a processor and a communication interface. The processor is configured to determine a first physical random access channel PRACH transmission occasion, where the first PRACH transmission occasion corresponds to analog beams of a wireless auxiliary device. The communication interface is configured to send a first message Msg1 on the first PRACH transmission occasion.

According to a seventh aspect, a network side device is provided, including a processor, a memory, and a program or instructions stored in the memory and executable on the processor, where when the program or instructions are executed by the processor, steps of the method according to the third aspect are implemented.

According to an eighth aspect, a network side device is provided, including a communication interface. The communication interface is configured to receive a Msg1 sent on a first PRACH transmission occasion, where
the first PRACH transmission occasion corresponds to analog beams of a wireless auxiliary device.

According to a ninth aspect, a readable storage medium is provided, where the readable storage medium stores a program or instructions, where when the program or instructions are executed by a processor, steps of the method according to the first aspect are implemented, or steps of the method according to the third aspect are implemented.

According to a tenth aspect, a chip is provided, including a processor and a communication interface, where the communication interface is coupled to the processor, and the processor is configured to run a program or instructions to implement the method according to the first aspect, or implement the method according to the third aspect.

According to an eleventh aspect, a computer program product is provided, where the computer program product is stored in a storage medium, and is executed by at least one processor to implement the method according to the first aspect, or implement the method according to the third aspect.

According to a twelfth aspect, a communication device is provided, where the communication device is configured to implement the method according to the first aspect, or implement the method according to the third aspect.

In embodiments of this application, the terminal only transmits the Msg1 on the PRACH transmission occasion corresponding to the analog beams of the wireless auxiliary device, avoiding a problem of increased delay in a random access process caused by polling of the analog beams of the wireless auxiliary device.

### BRIEF DESCRIPTION OF THE DRAWINGS

FIG. 1 is a first block diagram of a wireless communication system;
FIG. 2 is a first schematic flowchart of a transmission processing method according to an embodiment of this application;
FIG. 3 is a second block diagram of a wireless communication system;
FIG. 4 is a schematic diagram of a transmission corresponding to FIG. 3;
FIG. 5 is a first schematic diagram of a correlation between a PRACH RO and an RIS analog beam;
FIG. 6 is a second schematic diagram of a correlation between a PRACH RO and an RIS analog beam;
FIG. 7 is a second schematic flowchart of a transmission processing method according to an embodiment of this application;
FIG. 8 is a diagram of a structure of a transmission processing apparatus corresponding to FIG. 2;
FIG. 9 is a diagram of a structure of a transmission processing apparatus corresponding to FIG. 7;
FIG. 10 is a diagram of a structure of a communication device according to an embodiment of this application;
FIG. 11 is a diagram of a structure of a terminal according to an embodiment of this application; and
FIG. 12 is a diagram of a structure of a network side device according to an embodiment of this application.

### DETAILED DESCRIPTION

The following clearly describes the technical solutions in embodiments of this application with reference to the accompanying drawings in embodiments of this application. Apparently, the described embodiments are some of the embodiments of this application rather than all of the embodiments. All other embodiments obtained by a person of ordinary skill in the art based on embodiments of this application shall fall within the protection scope of this application.

In the specification and claims of this application, terms "first" and "second", and the like are used to distinguish between similar objects, but not to describe a specific sequence or order. It may be understood that the terms used in such a way are interchangeable in proper circumstances, so that embodiments of this application can be implemented in a sequence other than that illustrated or described herein. In addition, the objects distinguished by "first" and "second" are usually of the same class, and are not limited in number. For example, a first object may be one first object or a plurality of first objects. In addition, "and/or" in the specification and claims indicates at least one of the connected objects, and the character "/" usually indicates an "or" relationship between associated objects.

It should be noted that, the technologies described in this application are not limited to a long term evolution (Long Term Evolution, LTE)/LTE-advanced (LTE-Advanced, LTE-A) system, and may further be applied to other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, and other systems. In embodiments of this application, terms "system" and "network" may be often interchangeably used. The technology described can be applied to the systems and radio technologies mentioned above, and can also be applied to other systems and radio technologies. The following description describes a new radio (New Radio, NR) system as an example, and the term "NR" is used in most of the following descriptions. However, these technologies can also be applied to applications other than that of the NR system, such as a 6-th generation (6-th Generation, 6G) communication system.

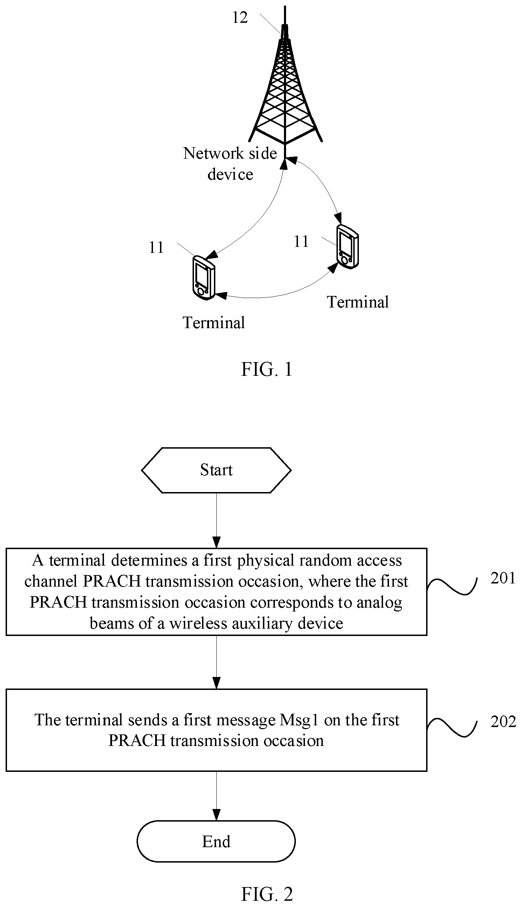

FIG. 1 is a block diagram of a wireless communication system to which an embodiment of this application can be applied. The network communication system includes a terminal 11 and a network side device 12. The terminal 11 may also be referred to as a terminal device or a user equipment (User Equipment, UE). The terminal 11 may be a mobile phone, a tablet personal computer (Tablet Personal Computer), a laptop computer (Laptop Computer), or be referred to as a laptop, a personal digital assistant (Personal Digital Assistant, PDA), a handheld computer, a netbook, a ultra-mobile personal computer (ultra-mobile personal computer, UMPC), a mobile Internet device (Mobile Internet Device, MID), a wearable device (Wearable Device), or a terminal side device such as a vehicle user equipment (Vehicle User Equipment, VUE), a pedestrian user equipment (Pedestrian User Equipment, PUE). The wearable device includes a smart watch, a bracelet, a headphone, glasses, and the like. It should be noted that, the specific type of the terminal 11 is not limited in the embodiment of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmitting receiving point (Transmitting Receiving Point, TRP), or some other suitable term in the field. As long as a same technical effect is achieved, the base station is not limited to a specific technical term. It should be noted that, the base station in the NR system is used as an example in the embodiment of this application, but the specific type of the base station is not limited.

The following describes the transmission processing method according to embodiments of this application in detail with reference to the accompanying drawings and using some embodiments and their application scenarios.

As shown in FIG. 2, an embodiment of this application provides a transmission processing method, including:
Step 201: A terminal determines a first physical random access channel PRACH transmission occasion, where the first PRACH transmission occasion corresponds to analog beams of a wireless auxiliary device.

The terminal needs to determine a PRACH transmission occasion corresponding to the analog beams of the wireless auxiliary device, that is, the first physical random access channel (Physical Random Access Channel, PRACH) transmission occasion (Occasion), to send a Msg1 later.

Step 202: The terminal sends a first message Msg1 on the first PRACH transmission occasion.

The terminal sends, based on the first PRACH transmission occasion (the first RO) determined in step 201, the Msg1 on the PRACH transmission occasion.

In this way, the terminal only transmits the Msg1 on the PRACH transmission occasion corresponding to the analog beams of the wireless auxiliary device, avoiding a problem of increased delay in a random access process caused by polling of the analog beams of the wireless auxiliary device.

In this embodiment, the wireless auxiliary device may be an intelligent surface, a repeator (repeator), a backscatter (backscatter), or another wireless signal forwarding device with beam forming. The wireless auxiliary device is visible to and controlled by a network side device, and the network side device can determine the analog beams of the wireless auxiliary device.

It should be noted that, the intelligent surface, such as an RIS, has the following operating principles and device structures. The RIS includes a front-end artificial surface and a back-end control module. The front-end artificial surface includes densely arranged unit of artificial devices. A characteristic of a device in the unit of devices is influenced by a control signal/bias voltage of the device, and a different control signal/bias voltage corresponds to a different reflection/refraction coefficient. The change in the reflection/refraction coefficient will influence a phase and/or intensity of a reflected/refracted signal. Microscopically, each unit of devices leads to independent reflected/refracted signals, while macroscopically, these signals are combined to achieve manipulation on electromagnetic waves. The control signal/bias voltage is provided by the back-end control module. There are two implementations of an RIS device. One implementation is an RIS device that only includes passive units. Another implementation is a hybrid RIS device that includes active and passive units, where most of the units in an array of the RIS units are passive units and a small number of units are active units. A passive unit is the new unit of devices mentioned above. Each passive unit contains a controllable device (such as a PIN transistor, a variable capacitor, and the like), and a state of the controllable device is controlled by a control module of the RIS device. The state of the controllable device corresponds to a different electromagnetic characteristic of the passive unit, such as an amplitude of energy, a phase, and a polarization direction of a wireless signal. An active unit contains an RF link unit, which can receive or send an RF signal, process the wireless signal, or send the wireless signal based on base station instructions or protocol rules. The cost and power consumption of the active unit are higher than those of the passive unit. However, a channel measurement based on the active unit is more accurate and simple compared to a channel measurement based on the passive unit. In the hybrid RIS device, the active units of the hybrid RIS device are sparsely distributed to balance cost and channel measurement.

The RIS may be used for scenarios of enhanced hotspot traffic or coverage hole filling. In the future, a data service (such as AR/VR, a high-definition video, and the like) with very high traffic, or another service with a very high demand for wireless channels, will arise in wireless services. For convenience of expression, the service with the high demand herein is referred to as a hotspot service, and users of the service are referred to as hotspot users. A feasible solution for addressing the hotspot demand of hot users is to dynamically increase the available beams for the hotspot users. A serving cell dynamically activates an auxiliary device (such as a panel (panel), the RIS), to increase the available beams for the hotspot users and meet the demand for the hotspot service. Obstacles within a coverage area of the cell lead to a coverage hole, resulting in a weak strength of the wireless signal in the hole region and affecting communication quality. This phenomenon is more common in the high-frequency band/millimeter wave band. The RIS is a device that is independent of the base station and may be deployed far away from the base station. It provides communication services for the coverage hole region by forwarding/reflecting signals from the base station. The RIS can be prevented from being obstructed by obstacles through reasonable deployment of nodes, ensuring good signal coverage.

Optionally, in this embodiment, step 201 includes:
obtaining, by the terminal, a first transmission parameter, where the first transmission parameter is a relevant parameter of a synchronization signal and PBCH block (Synchronization Signal and PBCH block, SSB) and the wireless auxiliary device; and
determining, by the terminal in response to detecting a first SSB and based on the first transmission parameter, a first PRACH transmission occasion on which the analog beams correspond to the first SSB.

To be specific, the terminal determines, in response to detecting the first SSB and based on the obtained relevant parameter of the SSB and the wireless auxiliary device, a first PRACH transmission occasion on which the analog beams of the wireless auxiliary device correspond to the first SSB. The first transmission parameter may be carried by a system message.

In this embodiment, the obtaining, by the terminal, a first transmission parameter may alternatively be: obtaining a relevant parameter of a channel state information reference signal (Channel State Information Reference Signal, CSI-RS) and the wireless auxiliary device; and determining, in response to detecting the first CSI-RS and based on the obtained relevant parameter of the CSI-RS and the wireless auxiliary device, a first PRACH transmission occasion on which the analog beams correspond to the first CSI-RS. The following of embodiments of this application describes the implementation of determining a first PRACH transmission occasion in response to detecting the first SSB. The implementation is applicable to determining a first PRACH transmission occasion in response to detecting the first CSI-RS, which is not described herein in detail.

Optionally, the first transmission parameter includes at least one of the following:
a number of the analog beams associated with the SSB;
occurrence time information of each of the analog beams associated with a same SSB; and
a cycle of a PRACH transmission occasion.

The analog beams associated with an SSB may be analog beams existing within a coverage area of an SSB beam, and may be generated by one or more wireless auxiliary devices. Similarly, analog beams associated with a same SSB may also be generated by one or more wireless auxiliary devices. Specific forwarding form of the analog beams is determined by actual network deployment and base station configuration. Analog beams existing within a coverage area of an SSB beam may also be understood as analog beams corresponding to an SSB.

Specifically, occurrence time information of each of the analog beams associated with a same SSB may include an occurrence period and an occurrence cycle. For example, in a feasible configuration, SSB1 corresponds to an analog beam 1 and an analog beam 2. A cycle for SSB1 is 5 ms, and an occurrence cycle for the analog beam 1 and the analog beam 2 is 10 ms. Within continuous cycles of SSB1, an occurrence period for the analog beam 1 in one cycle of SSB1 is the 1-st ms to the 4-th ms, and an occurrence period for the analog beam 2 in next cycle of SSB1 is the 2-nd ms to the 4-th ms. Alternatively, in another feasible configuration, SSB1 corresponds to an analog beam 1 and an analog beam 2. A cycle for SSB1 is 5 ms, and an occurrence cycle for the analog beam 1 and the analog beam 2 is 5 ms. Within continuous cycles of SSB1, an occurrence period for the analog beam 1 in one cycle of SSB1 is the 1-st ms to the 2-nd ms, and an occurrence period for the analog beam 2 in the same cycle of SSB1 is the 3-rd ms to the 5-th ms.

At least one uplink PRACH resource is included during the occurrence period, for transmitting randomly accessed uplink signals.

Optionally, based on the first transmission parameter, in this embodiment, the determining, based on the first transmission parameter, a first PRACH transmission occasion on which the analog beams correspond to the first SSB includes:
determining, by the terminal based on the first transmission parameter, the number of the analog beams associated with the first SSB, and occurrence time information of each of the analog beams associated with the first SSB; and
using, by the terminal based on the determined number and occurrence time information of the analog beams, a PRACH transmission occasion within an occurrence time of each of the analog beams as the first PRACH transmission occasion.

First, the number of the analog beams associated with the first SSB, and occurrence time information of each of the analog beams associated with the first SSB, are determined based on a relevant parameter of the first SSB in the first transmission parameter; and then, a PRACH transmission occasion within an occurrence time of each of the analog beams is used as the first PRACH transmission occasion.

Optionally, the occurrence time information of each of the analog beams corresponding to the first SSB is:
predefined;
pre-configured;
directly indicated by the first transmission parameter; or
mapped and indicated by the first transmission parameter.

To be specific, in a case that the occurrence time information of each of the analog beams associated with the first SSB is predefined or pre-configured, the occurrence time information is determined based on predefined or pre-configured rules. Being pre-configured may be referred to as being pre-configured based on the system message. In a case that the first transmission parameter includes the occurrence time information of each of the analog beams associated with the first SSB, the occurrence time information may be directly indicated and determined by the first transmission parameter. In a case that the first transmission parameter includes other information with a mapping relationship with the occurrence time information of each of the analog beams associated with the first SSB, the occurrence time information may be mapped and indicated by the other information. The mapping relationship is predefined or pre-configured. For at least two of the followings: the occurrence time information of each of the analog beams associated with the first SSB is predefined, the occurrence time information of each of the analog beams associated with the first SSB is pre-configured, the first transmission parameter includes the occurrence time information of each of the analog beams associated with the first SSB, and the first transmission parameter includes other information with a mapping relationship with the occurrence time information of each of the analog beams associated with the first SSB, the occurrence time information of each of the analog beams associated with the first SSB may be determined in a specific way, and the specific way is predefined or pre-configured.

Assuming that the first transmission parameter includes a cycle of the PRACH transmission occasion, and the cycle of the PRACH transmission occasion is associated with the occurrence time information of each of the analog beams associated with the first SSB, the occurrence time information of each of the analog beams associated with the first SSB may be determined by the cycle of the PRACH transmission occasion. For example, the occurrence cycle of each of the analog beams associated with the first SSB is related to the cycle T of the PRACH transmission occasion (RACH Occasion, RO). For example, an association relationship between the SSB and the PRACH transmission occasion is determined according to rules specified by a protocol, and the starting time of the mapping is a wireless frame 0. In the process of mapping between the SSB and the PRACH transmission occasion, the wireless frame 0 is used as a start point. The first n PRACH transmission occasions associated with the first SSB are associated with an analog beam 0 of the wireless auxiliary device. The subsequent n PRACH transmission occasions associated with the first SSB are associated with an analog beam 1 of the wireless auxiliary device, and so on. Where n is a positive integer and may be predefined by the protocol or configured by the system message.

In this embodiment, the association relationship between the PRACH transmission occasion and the analog beams of the wireless auxiliary device indicated implicitly may be shown in FIG. 5. The association relationship between each PRACH transmission occasion and the analog beams of the wireless auxiliary device configured explicitly by the system message may be shown in FIG. 6.

In this embodiment, the first transmission parameter may be configured separately based on different SSB beams.

In addition, considering transmission requirements on the wireless auxiliary device in the current scenario, optionally, in this embodiment, before the sending, by the terminal, a first message Msg1 on the first PRACH transmission occasion, the method further includes:
determining, by the terminal, whether to send the Msg 1 on the first PRACH transmission occasion corresponding to the first SSB.

Optionally, the determining, by the terminal, whether to send the Msg1 on the first PRACH transmission occasion corresponding to the first SSB includes:
detecting, by the terminal, signal strength of a first signal, and determining to send the Msg1 on the first PRACH transmission occasion corresponding to the first SSB in a case that the detected signal strength is less than a first threshold; or
measuring, by the terminal, a channel correlation of a first signal, and determining to send the Msg1 on the first PRACH transmission occasion corresponding to the first SSB in a case that the measured channel correlation is less than a second threshold. The channel correlation of the first signal may be measured in such a way that two first signals are transmitted separately at two different time periods, or the channel correlation on a plurality of symbols are occupied during a transmission process of the first signal.

To be specific, on one hand, the terminal can detect the signal strength of the first signal, and determine to send the Msg1 on the first PRACH transmission occasion corresponding to the first SSB in a case that the detected signal strength is less than a first threshold, and the signal coverage in the current scene is weak, requiring the assistance of the wireless auxiliary device. On the other hand, the terminal can measure the channel correlation of the first signal, and determine to send the Msg1 on the first PRACH transmission occasion corresponding to the first SSB when the measured channel correlation is less than a second threshold and the channel is affected. If the detected signal strength is not less than the first threshold or the measured channel correlation is not less than the second threshold, the terminal uses a random access process for direct communication between the terminal and network side devices for random access.

Optionally, the first signal includes: a first SSB; or a signal in quasi co-location (Quasi co-location, QCL) with the first SSB. The signal QCL with the SSB may be a reference signal, such as a channel state information reference signal (Channel State Information Reference Signal, CSI-RS) or a demodulation reference signal (Demodulation Reference Signal, DMRS). Therefore, the detecting signal strength of the first signal may be detecting signal strength of the first SSB, of the CSI-RS QCL with the first SSB, or of the DMRS QCL with the first SSB. Similarly, the measuring a channel correlation of the first signal may be measuring a channel correlation of the first SSB, of the CSI-RS QCL with the first SSB, or of the DMRS QCL with the first SSB.

Specifically, taking an SSB as an example, measuring a channel correlation of the SSB may compare a channel correlation of the same SSB received twice before and after, or compare a channel correlation of a primary synchronization signal (Primary Synchronization Signal, PSS) and a secondary synchronization signal (Secondary Synchronization Signal, SSS) in the same SSB received twice before and after.

Optionally, in this embodiment, step 202 includes:
repeatedly sending, by the terminal, the Msg1 for N times based on a second transmission parameter on the first PRACH transmission occasion corresponding to the first SSB, where
N is equal to the number of the analog beams associated with the first SSB; and
the second transmission parameter remains unchanged during the N times of sending.

For example, when there are 5 analog beams associated with the first SSB, transmission of the Msg1 needs to be repeated for 5 times. Each transmission is sent on the PRACH transmission occasion corresponding to the analog beams.

Optionally, the second transmission parameter includes at least one of the following:
a sending power;
a preamble; and
an occupied PRACH transmission occasion.

The sending power may be calculated based on received signal strength of the SSB. The preamble (preamble) may be different from a set of preambles defined in the protocol for other purposes (such as a 4-step RACH, a 2-step RACH, and the like.). The occupied PRACH transmission occasion may indicate a respective PRACH transmission occasion for each analog beam, or PRACH transmission occasions for all analog beams.

During the repeated sending, the terminal repeatedly sends the Msg1 on a plurality of ROs using a specific analog beam of the wireless auxiliary device as a start point (for example, the RO in the time period corresponding to the analog beam 0).

Further, in addition to determining the first PRACH transmission occasion as above, in this embodiment, optionally, step 201 further includes:
obtaining, by the terminal in response to detecting a second SSB, control resource set (control resource set, CORESET) configuration information corresponding to the second SSB, where the CORESET configuration information is used for indicating a time-frequency resource of a CORESET; and
detecting, by the terminal, the CORESET, and determining a first PRACH transmission occasion corresponding to the second SSB.

In this way, the terminal detects, in response to detecting the second SSB and obtaining the CORESET configuration information corresponding to the second SSB, the CORESET and determines the first PRACH transmission occasion corresponding to the second SSB. In this embodiment, the terminal detects, in response to detecting the second CSI-RS and obtaining the CORESET configuration information corresponding to the second CSI-RS, the CORESET and determines the first PRACH transmission occasion. The following of embodiments of this application describes the implementation of determining a first PRACH transmission occasion in response to detecting the second SSB. The implementation is applicable to determining a first PRACH transmission occasion in response to detecting the second CSI-RS, which is not described herein in detail.

The CORESET configuration information may be carried by the system message, or may be indicated by other information with a mapping relationship with the CORESET configuration information, such as CORESET#0 associated with a reused SSB.

Optionally, the detecting, by the terminal, the CORESET, and determining a first PRACH transmission occasion corresponding to the second SSB includes:
in response to detecting downlink control information (Downlink Control Information, DCI) based on the CORESET configuration information, and in a case that the DCI is used for dynamically scheduling a PRACH transmission occasion, determining, by the terminal, that the PRACH transmission occasion dynamically scheduled by the DCI is the first PRACH transmission occasion; or
in response to detecting that signal strength of a demodulation reference signal DMRS of a physical downlink control channel PDCCH is greater than a third threshold or signal strength of the second SSB based on a relevant parameter of the CORESET, and in a case that the PDCCH is configured to transmit the DCI that dynamically schedules the PRACH transmission occasion, determining, by the terminal, that a PRACH transmission occasion within a first time window is the first PRACH transmission occasion, where the CORESET is used as a start point of the first time window.

To be specific, on one hand, the terminal uses, in response to detecting DCI used for dynamically scheduling a PRACH transmission occasion based on the CORESET configuration information, the PRACH transmission occasion dynamically scheduled by the DCI as the first PRACH transmission occasion. In response to detecting the DCI, and further in a case that signal strength of a DMRS of a physical downlink control channel (Physical Downlink Control Channel, PDCCH) of the DCI is greater than a preset signal strength, the PRACH transmission occasion dynamically scheduled by the DCI may be used as the first PRACH transmission occasion.

On the other hand, the terminal uses, in response to detecting the DMRS of the PDCCH based on the CORESET configuration information, and in a case that the signal strength of the DMRS is greater than the third threshold or the signal strength of the second SSB, a PRACH transmission occasion within a first time window as the first PRACH transmission occasion. The first time window is a time window with a specific length and using the CORESET as a start point, where the specific length may be configured by the system message or predefined by the protocol. The first PRACH transmission occasion is determined in a case that the two conditions mentioned above for determining a first PRACH transmission occasion are both met, or the first PRACH transmission occasion is determined in a case that one of the conditions is met. The specific rule is defined by the protocol or configured by the system message.

In this embodiment, the PRACH transmission occasion scheduled by the DCI may be a PRACH transmission occasion dedicated for random access to analog beams of the wireless auxiliary device. The PRACH transmission occasion may be explicitly scheduled by the DCI by including information such as a time-frequency resource location set of the PRACH transmission occasion, a preamble set, and a PRACH format. Alternatively, in response to detecting the DCI, the PRACH transmission occasion within the second time window after the DCI may be used as the first PRACH transmission occasion. The starting point and length of the second time window herein may be configured by the system message or predefined by the protocol.

In response to the terminal sending the Msg1 on the first PRACH transmission occasion, the network side device (such as a base station) may determine, after receiving the Msg1, the analog beams of the wireless auxiliary device corresponding to the terminal, thereby sending the second message Msg2. The network side device can determine a second PRACH transmission occasion, and the second PRACH transmission occasion is a PRACH transmission occasion for the analog beams of the wireless auxiliary device corresponding to the terminal. Then, the network side device calculates a random access radio network temporary identifier (Random Access Radio Network Temporary Identifier, RA-RNTI) based on the determined second PRACH transmission occasion, and scrambles a Msg2 by using the RA-RNTI and sends the Msg2.

In a case that the first PRACH transmission occasion includes a plurality of PRACH transmission occasions, the network side device selects the second PRACH transmission occasion based on whether signal strength of a same preamble signal on the plurality of PRACH transmission occasions meets a preset condition. Alternatively, the network side device uses the first PRACH transmission occasion as the second PRACH transmission occasion in a case that the first PRACH transmission occasion includes one PRACH transmission occasion.

Therefore, optionally, in this embodiment, after the sending, by the terminal, a first message Msg1 on the first PRACH transmission occasion, the method further includes:
receiving, by the terminal, a second message Msg2 sent by a network side device, where the Msg2 is scrambled by using a random access radio network temporary identifier RA-RNTI, and the RA-RNTI is calculated based on a second PRACH transmission occasion;
in a case that the first PRACH transmission occasion includes a plurality of PRACH transmission occasions, the second PRACH transmission occasion is a PRACH transmission occasion on which signal strength of a signal meets a preset condition among the plurality of PRACH transmission occasions; and
in a case that the first PRACH transmission occasion includes one PRACH transmission occasion, the second PRACH transmission occasion is the first PRACH transmission occasion.

For a Msg2 scrambled by using the RA-RNTI, optionally, the receiving, by the terminal, a second message Msg2 sent by a network side device includes:
calculating, by the terminal in a case that the first PRACH transmission occasion corresponds to a plurality of PRACH transmission occasions, a plurality of RA-RNTIs based on the plurality of PRACH transmission occasions; and
detecting, by the terminal, the Msg2 by using the plurality of RA-RNTIs.

In this embodiment, the first threshold, the second threshold, and the third threshold may be predefined or preset.

In this embodiment, the detecting the SSB (the first SSB or the second SSB) may also be understood as detecting that the SSB has implemented a downlink slot synchronization.

In summary, in the method according to embodiments of this application, a random access process is utilized to implement preliminary training of the analog beams of the wireless auxiliary device in a cell where at least one wireless auxiliary device is deployed. By using a static or dynamic scheduling relationship between the analog beams of the wireless auxiliary device and the PRACH transmission occasion, an effect of a forwarded beam is obtained during the random access, while avoiding increased delay in a random access process caused by polling of the analog beams of the wireless auxiliary device.

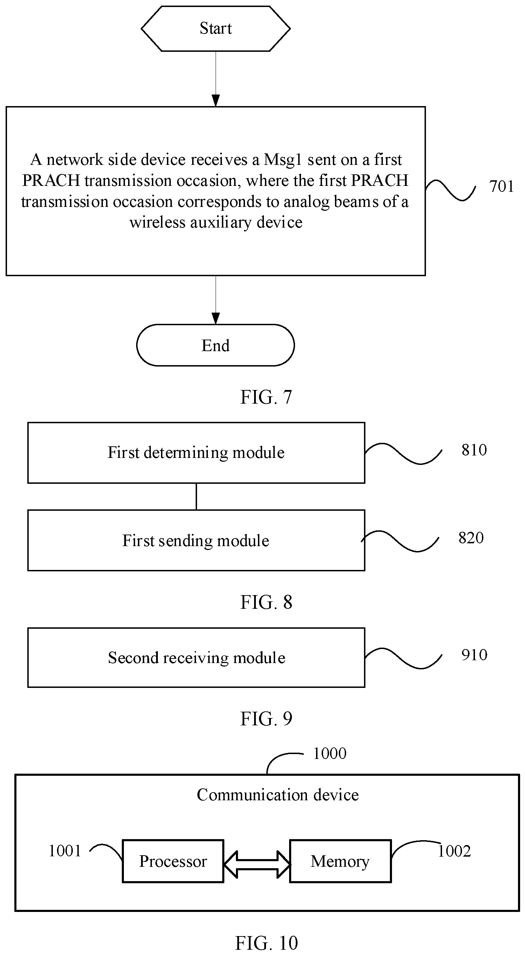

As shown in FIG. 7, an embodiment of this application provides a transmission processing method, including:

Step 701: A network side device receives a Msg1 sent on a first PRACH transmission occasion, where
the first PRACH transmission occasion corresponds to analog beams of a wireless auxiliary device.

In this way, the network side device only needs to receive the Msg1 sent by the terminal on the First PRACH transmission occasion corresponding to the analog beams of the wireless auxiliary device, avoiding a problem of increased delay in a random access process caused by polling of the analog beams of the wireless auxiliary device.

Optionally, after the receiving, by a network side device, a first message Msg1 sent on a first PRACH transmission occasion, the method further includes:
determining, by the network side device, a second PRACH transmission occasion;
calculating, by the network side device, an RA-RNTI based on the second PRACH transmission occasion; and
scrambling, by the network side device, a Msg2 by using the RA-RNTI, and sending the Msg2.

Optionally, the determining, by the network side device, a second PRACH transmission occasion includes:
selecting, by the network side device in a case that the first PRACH transmission occasion includes a plurality of PRACH transmission occasions, the second PRACH transmission occasion based on whether signal strength of a same preamble signal on the plurality of PRACH transmission occasions meets a preset condition; or
using, by the network side device, the first PRACH transmission occasion as the second PRACH transmission occasion in a case that the first PRACH transmission occasion includes one PRACH transmission occasion.

Optionally, the method further includes:
sending, by a network device, a first transmission parameter, where the first transmission parameter includes at least one of the following:
a number of the analog beams associated with the SSB;
occurrence time information of each of the analog beams associated with a same SSB; and
a cycle of a PRACH transmission occasion.

Optionally, the method further includes:
sending, by the network device, CORESET configuration information, where the CORESET configuration information is used for indicating a time-frequency resource of a CORESET.

Optionally, the method further includes:
sending, by the network device, DCI, where the DCI is used for dynamically scheduling a PRACH transmission occasion.

It should be noted that, the method according to embodiments of this application is implemented in conjunction with the transmission processing method executed by the terminal, the implementations of embodiments of the transmission processing method executed by the terminal are applicable to the method, and the same technical effects can be achieved.

It should be further noted that, the transmission processing method provided in embodiments of this application may be executed by a transmission processing apparatus, or by a control module in the transmission processing apparatus that is configured for executing and loading the transmission processing method. In embodiments of this application, the transmission processing apparatus executing and loading the transmission processing method is used as an example to illustrate the transmission processing method provided by embodiments of this application.

As shown in FIG. 8, an embodiment of this application provides a transmission processing apparatus, including:
a first determining module 810, configured to determine a first physical random access channel PRACH transmission occasion, where the first PRACH transmission occasion corresponds to analog beams of a wireless auxiliary device; and
a first sending module 820, configured to send a first message Msg1 on the first PRACH transmission occasion.

Optionally, the first determining module includes:
a first obtaining submodule, configured to obtain a first transmission parameter, where the first transmission parameter is a relevant parameter of a synchronization signal and PBCH block SSB and the wireless auxiliary device; and
a first determining submodule, configured to determine, in response to detecting a first SSB and based on the first transmission parameter, a first PRACH transmission occasion on which the analog beams correspond to the first SSB.

Optionally, the first transmission parameter includes at least one of the following:
a number of the analog beams associated with the SSB;
occurrence time information of each of the analog beams associated with a same SSB; and
a cycle of a PRACH transmission occasion.

Optionally, the first determining submodule is further configured to:
determine, based on the first transmission parameter, the number of the analog beams associated with the first SSB, and occurrence time information of each of the analog beams associated with the first SSB; and
use, based on the determined number and occurrence time information of the analog beams, a PRACH transmission occasion within an occurrence time of each of the analog beams as the first PRACH transmission occasion.

Optionally, the occurrence time information of each of the analog beams corresponding to the first SSB is:
predefined;
pre-configured;
directly indicated by the first transmission parameter; or
mapped and indicated by the first transmission parameter.

Optionally, the apparatus further includes:
a determining module, configured to determine whether to send the Msg1 on the first PRACH transmission occasion corresponding to the first SSB.

Optionally, the determining module is further configured to:
detect signal strength of a first signal, and determine to send the Msg1 on the first PRACH transmission occasion corresponding to the first SSB in a case that the detected signal strength is less than a first threshold; or
measure a channel correlation of a first signal, and determine to send the Msg1 on the first PRACH transmission occasion corresponding to the first SSB in a case that the measured channel correlation is less than a second threshold.

Optionally, the first signal includes: a first SSB; or a signal in quasi co-location QCL with the first SSB.

Optionally, the first sending module is further configured to:
repeatedly send the Msg1 for N times based on a second transmission parameter on the first PRACH transmission occasion corresponding to the first SSB, where
N is equal to the number of the analog beams associated with the first SSB; and
the second transmission parameter remains unchanged during the N times of sending.

Optionally, the second transmission parameter includes at least one of the following:
a sending power;
a preamble; and
an occupied PRACH transmission occasion.

Optionally, the first determining module includes:
a second obtaining submodule, configured to obtain, in response to detecting a second SSB, control resource set CORESET configuration information corresponding to the second SSB, where the CORESET configuration information is used for indicating a time-frequency resource of a CORESET; and
a second determining submodule, configured to detect a CORESET, and determine the first PRACH transmission occasion corresponding to the second SSB.

Optionally, the second determining submodule is further configured to:
in response to detecting downlink control information DCI based on the CORESET configuration information, and in a case that the DCI is used for dynamically scheduling a PRACH transmission occasion, determine that the PRACH transmission occasion dynamically scheduled by the DCI is the first PRACH transmission occasion; or
in response to detecting that signal strength of a demodulation reference signal DMRS of a physical downlink control channel PDCCH is greater than a third threshold or signal strength of the second SSB based on a relevant parameter of the CORESET, and in a case that the PDCCH is configured to transmit the DCI that dynamically schedules the PRACH transmission occasion, determine that a PRACH transmission occasion within a first time window is the first PRACH transmission occasion, where the CORESET is used as a start point of the first time window.

Optionally, the apparatus further includes:
a first receiving module, configured to receive a second message Msg2 sent by a network side device, where the Msg2 is scrambled by using a random access radio network temporary identifier RA-RNTI, and the RA-RNTI is calculated based on a second PRACH transmission occasion;
in a case that the first PRACH transmission occasion includes a plurality of PRACH transmission occasions, the second PRACH transmission occasion is a PRACH transmission occasion on which signal strength of a signal meets a preset condition among the plurality of PRACH transmission occasions; and
in a case that the first PRACH transmission occasion includes one PRACH transmission occasion, the second PRACH transmission occasion is the first PRACH transmission occasion.

Optionally, the first receiving module further includes:
a first processing submodule, configured to calculate, in a case that the first PRACH transmission occasion corresponds to a plurality of PRACH transmission occasions, a plurality of RA-RNTIs based on the plurality of PRACH transmission occasions; and
a second processing submodule, configured to detect a Msg2 by using the plurality of RA-RNTIs.

The apparatus only sends the Msg1 on the First PRACH transmission occasion corresponding to the analog beams of the wireless auxiliary device, avoiding a problem of increased delay in a random access process caused by polling of the analog beams of the wireless auxiliary device.

It should be noted that, the apparatus is an apparatus to which the transmission processing method executed by the terminal is applied, the implementations of the method embodiments are applicable to the apparatus, and the same technical effects can be achieved.

The transmission processing apparatus according to embodiments of this application may be an apparatus, an apparatus or electronic device with an operating system, or a component, integrated circuit, or chip in a terminal. The apparatus or electronic device may be a mobile terminal or may be a non-mobile terminal. For example, the mobile terminal includes, but is not limited to, the type of the terminal 11 listed above. The non-mobile terminal may be a server, a network attached storage (Network Attached Storage, NAS), a personal computer (Personal Computer, PC), a television (Television, TV), an ATM, a self-service machine, or the like, which is not specifically limited in embodiments of this application.

The transmission processing apparatus according to embodiments of this application can implement the processes implemented by the terminal in the method embodiment of FIG. 2. To avoid repetition, details are not described herein again.

As shown in FIG. 9, an embodiment of this application provides a transmission processing apparatus, including:
a second receiving module 910, configured to receive a Msg1 sent on a first PRACH transmission occasion, where
the first PRACH transmission occasion corresponds to analog beams of a wireless auxiliary device.

Optionally, the apparatus further includes:
a second determining module, configured to determine a second PRACH transmission occasion;
a calculating module, configured to calculate an RA-RNTI based on the second PRACH transmission occasion; and
a second sending module, configured to scramble a Msg2 by using the RA-RNTI, and send the Msg2.

Optionally, the second determining module is further configured to:
select, in a case that the first PRACH transmission occasion includes a plurality of PRACH transmission occasions, the second PRACH transmission occasion based on whether signal strength of a same preamble signal on the plurality of PRACH transmission occasions meets a preset condition; or
use the first PRACH transmission occasion as the second PRACH transmission occasion in a case that the first PRACH transmission occasion includes one PRACH transmission occasion.

Optionally, the apparatus further includes:
a third sending module, configured to send a first transmission parameter, where the first transmission parameter includes at least one of the following:
a number of the analog beams associated with the SSB;
occurrence time information of each of the analog beams associated with a same SSB; and
a cycle of a PRACH transmission occasion.

Optionally, the apparatus further includes:
a fourth sending module, configured to send CORESET configuration information, where the CORESET configuration information is used for indicating a time-frequency resource of a CORESET.

Optionally, the apparatus further includes:
a fifth sending module, configured to send DCI, where the DCI is used for dynamically scheduling a PRACH transmission occasion.

The apparatus only needs to receive the Msg1 sent by the terminal on the First PRACH transmission occasion corresponding to the analog beams of the wireless auxiliary device, avoiding a problem of increased delay in a random access process caused by polling of the analog beams of the wireless auxiliary device.

It should be noted that, the transmission processing method executed by the network side device is applied to the apparatus, the implementations of the method embodiments are applicable to the apparatus, and the same technical effects can be achieved.

Optionally, as shown in FIG. 10, an embodiment of this application further provides a communication device 1000, including a processor 1001, a memory 1002, and a program or instructions stored in the memory 1002 and executable on the processor 1001. For example, when the communication device 1000 is the terminal, and when the program or instructions are executed by the processor 1001, the processes of the transmission processing method embodiments executed by the terminal are implemented, and the same technical effects can be achieved. When the communication device 1000 is the network side device, and when the program or instructions are executed by the processor 1001, the processes of the transmission processing method embodiments executed by the network side device are implemented, and the same technical effects can be achieved, which will not be described in detail herein again to avoid repetition.

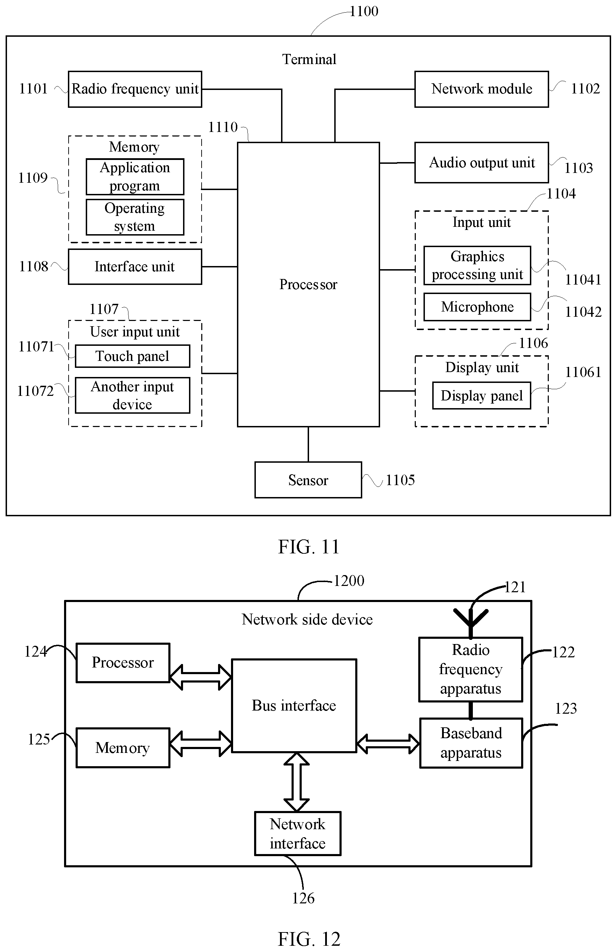

An embodiment of this application further provides a terminal, including a processor and a communication interface. The processor is configured to determine a first physical random access channel PRACH transmission occasion, where the first PRACH transmission occasion corresponds to analog beams of a wireless auxiliary device. The communication interface is configured to send a first message Msg1 on the first PRACH transmission occasion. The terminal embodiments correspond to the above terminal side method embodiments, and the various implementation processes and the implementations of the above method embodiments may be applied to the terminal embodiments, and the same technical effects can be achieved. Specifically, FIG. 11 is a schematic diagram of a hardware structure of a terminal according to embodiments of this application.

The terminal 1100 includes, but is not limited to, at least some of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 may further include a power supply (such as a battery) for supplying power to the components. The power supply may be logically connected to the processor 1110 by a power management system, thereby implementing functions such as charging, discharging, and power consumption management by using the power management system. The terminal structure shown in FIG. 11 does not constitute a limitation on the terminal, and the terminal may include more or fewer components than shown or combine some components, or have different component arrangements, which are not described herein in detail.

It should be understood that in embodiments of this application, the input unit 1104 may include a graphics processing unit (Graphics Processing Unit, GPU) 11041 and a microphone 11042. The GPU 11041 processes image data of a static picture or a video acquired by an image capturing device (for example, a camera) in a video capturing mode or an image capturing mode. The display unit 1106 may include a display panel 11061. The display panel 11061 may be configured in the form of a liquid crystal display, an organic light-emitting diode, or the like. The user input unit 1107 includes a touch panel 11071 and another input device 11072. The touch panel 11071 is also referred to as a touch screen. The touch panel 11071 may include two parts: a touch detection apparatus and a touch controller. The another input device 11072 may include, but is not limited to, a physical keyboard, a functional key (such as a volume control key or a switch key), a track ball, a mouse, and a joystick, which are not repeated herein.

In embodiments of this application, after receiving downlink data from a network side device, the radio frequency unit 1101 sends the downlink data to the processor 1110 for processing, and in addition, sends uplink data to the network side device. Generally, the radio frequency unit 1101 includes, but is not limited to, an antenna, at least one amplifier, a transceiver, a coupler, a low noise amplifier, a duplexer, and the like.

The memory 1109 may be configured to store a software program or instructions and various data. The memory 1109 may mainly include a program or instructions storage area and a data storage area. The program or instructions storage area may store an operating system, an application program or instructions required by at least one function (for example, a sound playback function and an image display function), and the like. In addition, the memory 1109 may include a high-speed random access memory, and may further include a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. For example, at least one magnetic disk storage device, a flash memory, or another non-volatile solid-state storage device.

The processor 1110 may include one or more processing units. Optionally, the processor 1110 may integrate an application processor and a modem processor, where the application processor mainly processes an operating system, a user interface, an application program or instructions, and the or like, and the modem processor mainly processes wireless communication, such as a baseband processor. It may be understood that the modem processor may not be integrated into the processor 1110.

The processor 1110 is configured to determine a first physical random access channel PRACH transmission occasion, where the first PRACH transmission occasion corresponds to analog beams of a wireless auxiliary device.

The radio frequency unit 1101 is configured to send a first message Msg1 on the first PRACH transmission occasion.

The terminal only transmits the Msg1 on the PRACH transmission occasion corresponding to the analog beams of the wireless auxiliary device, avoiding a problem of increased delay in a random access process caused by polling of the analog beams of the wireless auxiliary device.

Optionally, the processor 1110 is further configured to obtain a first transmission parameter, where the first transmission parameter is a relevant parameter of a synchronization signal and PBCH block SSB and the wireless auxiliary device; and determine, in response to detecting a first SSB and based on the first transmission parameter, a first PRACH transmission occasion on which the analog beams correspond to the first SSB.

Optionally, the first transmission parameter includes at least one of the following:
a number of the analog beams associated with the SSB;
occurrence time information of each of the analog beams associated with a same SSB; and
a cycle of a PRACH transmission occasion.

Optionally, the processor 1110 is further configured to determine, based on the first transmission parameter, the number of the analog beams associated with the first SSB, and occurrence time information of each of the analog beams associated with the first SSB; and use, based on the determined number and occurrence time information of the analog beams, a PRACH transmission occasion within an occurrence time of each of the analog beams as the first PRACH transmission occasion.

Optionally, the occurrence time information of each of the analog beams corresponding to the first SSB is:
predefined;
pre-configured;
directly indicated by the first transmission parameter; or
mapped and indicated by the first transmission parameter.

Optionally, the processor 1110 is further configured to determine whether to send the Msg1 on the first PRACH transmission occasion corresponding to the first SSB.

Optionally, the processor 1110 is further configured to detect signal strength of a first signal, and determine to send the Msg1 on the first PRACH transmission occasion corresponding to the first SSB in a case that the detected signal strength is less than a first threshold; or measure a channel correlation of a first signal, and determine to send the Msg1 on the first PRACH transmission occasion corresponding to the first SSB in a case that the measured channel correlation is less than a second threshold.

Optionally, the first signal includes: a first SSB; or a signal in quasi co-location QCL with the first SSB.

Optionally, the radio frequency unit 1101 is further configured to repeatedly send the Msg1 for N times based on a second transmission parameter on the first PRACH transmission occasion corresponding to the first SSB, where
N is equal to the number of the analog beams associated with the first SSB; and
the second transmission parameter remains unchanged during the N times of sending.

Optionally, the second transmission parameter includes at least one of the following:
a sending power;
a preamble; and
an occupied PRACH transmission occasion.

Optionally, the processor 1110 is further configured to obtain, in response to detecting a second SSB, control resource set CORESET configuration information corresponding to the second SSB, where the CORESET configuration information is used for indicating a time-frequency resource of a CORESET; and detect the CORESET, and determine a first PRACH transmission occasion corresponding to the second SSB.

Optionally, the processor 1110 is further configured to determine, in response to detecting downlink control information DCI based on the CORESET configuration information, and in a case that the DCI is used for dynamically scheduling a PRACH transmission occasion, that the PRACH transmission occasion dynamically scheduled by the DCI is the first PRACH transmission occasion; or determine, in response to detecting that signal strength of a demodulation reference signal DMRS of a physical downlink control channel PDCCH is greater than a third threshold or signal strength of the second SSB based on a relevant parameter of the CORESET, and in a case that the PDCCH is configured to transmit the DCI that dynamically schedules the PRACH transmission occasion, that a PRACH transmission occasion within a first time window is the first PRACH transmission occasion, where the CORESET is used as a start point of the first time window.

Optionally, the radio frequency unit 1101 is further configured to receive a second message Msg2 sent by a network side device, where the Msg2 is scrambled by using a random access radio network temporary identifier RA-RNTI, and the RA-RNTI is calculated based on a second PRACH transmission occasion;
in a case that the first PRACH transmission occasion includes a plurality of PRACH transmission occasions, the second PRACH transmission occasion is a PRACH transmission occasion on which signal strength of a signal meets a preset condition among the plurality of PRACH transmission occasions; and
in a case that the first PRACH transmission occasion includes one PRACH transmission occasion, the second PRACH transmission occasion is the first PRACH transmission occasion.

Optionally, the processor 1110 is further configured to calculate, in a case that the first PRACH transmission occasion corresponds to a plurality of PRACH transmission occasions, a plurality of RA-RNTIs based on the plurality of PRACH transmission occasions.

The terminal detects the Msg2 by using the plurality of RA-RNTIs.

An embodiment of this application further provides a network side device, including a communication interface. The communication interface is configured to receive a Msg1 sent on a first PRACH transmission occasion, where the first PRACH transmission occasion corresponds to analog beams of a wireless auxiliary device. The network side device may further include a processor. The network side device embodiments correspond to the above network side device method embodiments, and the various implementation processes and the implementations of the above method embodiments may be applied to the network side device embodiments, and the same technical effects can be achieved.

Specifically, an embodiment of this application further provides a network side device. As shown in FIG. 12, the network side device 1200 includes an antenna 121, a radio frequency apparatus 122, and a baseband apparatus 123. The antenna 121 is connected to the radio frequency apparatus 122. In an uplink direction, the radio frequency apparatus 122 receives information through the antenna 121, and sends the received information to the baseband apparatus 123 for processing. In a downlink direction, the baseband apparatus 123 processes the information to be sent, and sends the information to the radio frequency apparatus 122. The radio frequency apparatus 122 processes the received information and sends out the information through the antenna 121.

A frequency band processing apparatus may be located in the baseband apparatus 123. In the above embodiment, the method executed by the network side device may be implemented in the baseband apparatus 123. The baseband apparatus 123 includes a processor 124 and a memory 125.

The baseband apparatus 123 may include, for example, at least one baseband board, on which a plurality of chips are arranged. As shown in FIG. 12, one of the chips, for example, the processor 124, is connected to the memory 125 to call a program in the memory 125 and perform operations of the network side device of the above method embodiment.

The baseband apparatus 123 may further include a network interface 126 for exchanging information with the radio frequency apparatus 122, such as a common public radio interface (Common Public Radio Interface, CPRI).

Specifically, the network side device of embodiments of the present invention further includes instructions or a program stored in the memory 125 and executable on the processor 124. The processor 124 calls the instructions or program in the memory 125 to implement the methods executed by various modules shown in FIG. 9, and the same technical effects can be achieved. To avoid repetition, details are not described herein again.

An embodiment of this application further provides a readable storage medium, storing a program or instructions, where when the program or instructions are executed by a processor, the processes of the foregoing transmission processing method embodiments are implemented, and the same technical effects can be achieved. To avoid repetition, details are not described herein again.

The processor is a processor in the terminal described in the above embodiments. The readable storage medium includes a computer-readable storage medium, such as a computer read-only memory (Read-Only Memory, ROM), a random access memory (Random Access Memory, RAM), a magnetic disk, an optical disc, or the like.

An embodiment of this application further provides a chip, including a processor and a communication interface, where the communication interface is coupled to the processor, and the processor is configured to run a program or instructions to implement the processes of the foregoing transmission processing method embodiments, and the same technical effects can be achieved. To avoid repetition, details are not described herein again.

It should be understood that the chip mentioned in embodiments of this application may also be referred to as a system level chip, a system chip, a chip system, a system on chip, or the like.

An embodiment of this application further provides a computer program product, where the computer program product is stored in a storage medium, and is executed by at least one processor to implement the processes of the foregoing transmission processing method embodiments, and the same technical effects can be achieved. To avoid repetition, details are not described herein again.

It should be noted that, terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one..." does not exclude that there are still other same elements in the processes, methods, objects, or apparatuses. In addition, it should be noted that the scope of the methods and apparatuses in embodiments of this application is not limited to performing functions in the order shown or discussed, but may also include performing functions in a substantially simultaneous manner or in an opposite order based on the involved functions. For example, the described methods may be executed in an order other than the described orders, and various steps may also be added, omitted, or combined. In addition, features described with reference to some examples may be combined in other examples.

Through the descriptions of the foregoing implementations, a person skilled in the art may clearly understand that the methods in the foregoing embodiments may be implemented by means of software and a necessary general hardware platform, and certainly, may also be implemented by hardware, but in many cases, the former manner is a better implementation. Based on such understanding, the technical solutions of this application or a part thereof that makes a contribution to the prior art may be essentially embodied in a form of a computer software product. The computer software product is stored in a storage medium (such as a ROM/RAM, a disk, and an optical disk), including several instructions to enable one electronic device (which may be a mobile phone, a computer, a server, an air conditioner a network device, or the like) to perform the methods in embodiments of this application.

Embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A transmission processing method, comprising:
determining, by a terminal, a first physical random access channel PRACH transmission occasion, wherein the first PRACH transmission occasion corresponds to analog beams of a wireless auxiliary device; and
sending, by the terminal, a first message Msg1 on the first PRACH transmission occasion.

2. The method according to claim 1, wherein the determining, by a terminal, a first physical random access channel PRACH transmission occasion comprises:
obtaining, by the terminal, a first transmission parameter, wherein the first transmission parameter is a relevant parameter of a synchronization signal block SSB and the wireless auxiliary device; and
determining, by the terminal in response to detecting a first SSB and based on the first transmission parameter, the first PRACH transmission occasion on which the analog beams correspond to the first SSB.

3. The method according to claim 2, wherein the first transmission parameter comprises at least one of following:
a number of the analog beams associated with the SSB;
occurrence time information of each of the analog beams associated with a same SSB; and
a cycle of a PRACH transmission occasion.

4. The method according to claim 3, wherein the determining, based on the first transmission parameter, the first PRACH transmission occasion on which the analog beams correspond to the first SSB comprises:
determining, by the terminal based on the first transmission parameter, a number of the analog beams associated with the first SSB, and occurrence time information of each of the analog beams associated with the first SSB; and
using, by the terminal based on the determined number and occurrence time information of the analog beams, a PRACH transmission occasion within an occurrence time of each of the analog beams as the first PRACH transmission occasion.

5. The method according to claim 4, wherein the occurrence time information of each of the analog beams corresponding to the first SSB is:
predefined;
pre-configured;
directly indicated by the first transmission parameter; or
mapped and indicated by the first transmission parameter.

6. The method according to claim 2, wherein before the sending, by the terminal, a first message Msg1 on the first PRACH transmission occasion, the method further comprises:
determining, by the terminal, whether to send the Msg1 on the first PRACH transmission occasion corresponding to the first SSB.

7. The method according to claim 6, wherein the determining, by the terminal, whether to send the Msg1 on the first PRACH transmission occasion corresponding to the first SSB comprises:
detecting, by the terminal, signal strength of a first signal, and determining to send the Msg1 on the first PRACH transmission occasion corresponding to the first SSB in a case that the detected signal strength is less than a first threshold; or
measuring, by the terminal, a channel correlation of the first signal, and determining to send the Msg1 on the first PRACH transmission occasion corresponding to the first SSB in a case that the measured channel correlation is less than a second threshold.

8. The method according to claim 7, wherein the first signal comprises: a first SSB; or a signal in quasi co-location QCL with the first SSB.

9. The method according to claim 2, wherein the sending, by the terminal, a first message Msg1 on the first PRACH transmission occasion comprises:
repeatedly sending, by the terminal, the Msg1 for N times based on a second transmission parameter on the first PRACH transmission occasion corresponding to the first SSB, wherein
N is equal to a number of the analog beams associated with the first SSB; and
the second transmission parameter remains unchanged during the N times of sending.

10. The method according to claim 9, wherein the second transmission parameter comprises at least one of following:
a sending power;
a preamble; and
an occupied PRACH transmission occasion.

11. The method according to claim 1, wherein the determining, by a terminal, a first physical random access channel PRACH transmission occasion comprises:
obtaining, by the terminal in response to detecting a second SSB, control resource set CORESET configuration information corresponding to the second SSB, wherein the CORESET configuration information is used for indicating a time-frequency resource of a CORESET; and
detecting, by the terminal, the CORESET, and determining the first PRACH transmission occasion corresponding to the second SSB.

12. The method according to claim 11, wherein the detecting, by the terminal, the CORESET, and determining the first PRACH transmission occasion corresponding to the second SSB comprises:
in response to detecting downlink control information DCI based on the CORESET configuration information, and in a case that the DCI is used for dynamically scheduling a PRACH transmission occasion, determining, by the terminal, that the PRACH transmission occasion dynamically scheduled by the DCI is the first PRACH transmission occasion; or
in response to detecting that signal strength of a demodulation reference signal DMRS of a physical downlink control channel PDCCH is greater than a third threshold or signal strength of the second SSB based on a relevant parameter of the CORESET, and in a case that the PDCCH is configured to transmit the DCI that dynamically schedules the PRACH transmission occasion, determining, by the terminal, that a PRACH transmission occasion within a first time window is the first PRACH transmission occasion, wherein the CORESET is used as a start point of the first time window.

13. The method according to claim 1, wherein after the sending, by the terminal, a first message Msg1 on the first PRACH transmission occasion, the method further comprises:
receiving, by the terminal, a second message Msg2 sent by a network side device, wherein the Msg2 is scrambled by using a random access radio network temporary identifier RA-RNTI, and the RA-RNTI is calculated based on a second PRACH transmission occasion;
in a case that the first PRACH transmission occasion comprises a plurality of PRACH transmission occasions, the second PRACH transmission occasion is a PRACH transmission occasion on which signal strength of a signal meets a preset condition among the plurality of PRACH transmission occasions; and
in a case that the first PRACH transmission occasion comprises one PRACH transmission occasion, the second PRACH transmission occasion is the first PRACH transmission occasion.

14. The method according to claim 13, wherein the receiving, by the terminal, a second message Msg2 sent by a network side device comprises:
calculating, by the terminal in a case that the first PRACH transmission occasion corresponds to the plurality of PRACH transmission occasions, a plurality of RA-RNTIs based on the plurality of PRACH transmission occasions; and
detecting, by the terminal, the Msg2 by using the plurality of RA-RNTIs.

15. A transmission processing method, comprising:
receiving, by a network side device, a Msg1 sent on a first PRACH transmission occasion, wherein
the first PRACH transmission occasion corresponds to analog beams of a wireless auxiliary device.

16. The method according to claim 15, wherein after the receiving, by a network side device, a first message Msg1 sent on a first PRACH transmission occasion, the method further comprises:
determining, by the network side device, a second PRACH transmission occasion;
calculating, by the network side device, an RA-RNTI based on the second PRACH transmission occasion; and
scrambling, by the network side device, a Msg2 by using the RA-RNTI, and sending the Msg2.

17. The method according to claim 16, wherein the determining, by the network side device, a second PRACH transmission occasion comprises:
selecting, by the network side device in a case that the first PRACH transmission occasion comprises a plurality of PRACH transmission occasions, the second PRACH transmission occasion based on whether signal strength of a same preamble signal on the plurality of PRACH transmission occasions meets a preset condition; or
using, by the network side device, the first PRACH transmission occasion as the second PRACH transmission occasion in a case that the first PRACH transmission occasion comprises one PRACH transmission occasion.

18. The method according to claim 15, further comprising:
sending, by the network side device, a first transmission parameter, wherein the first transmission parameter comprises at least one of following:
a number of the analog beams associated with an SSB;
occurrence time information of each of the analog beams associated with a same SSB; and
a cycle of a PRACH transmission occasion.

19. The method according to claim 15, further comprising:
sending, by the network side device, CORESET configuration information, wherein the CORESET configuration information is used for indicating a time-frequency resource of a CORESET.

20. The method according to claim 15, further comprising:
sending, by the network side device, DCI, wherein the DCI is used for dynamically scheduling a PRACH transmission occasion.

21. A transmission processing apparatus, comprising:
a first determining module, configured to determine a first physical random access channel PRACH transmission occasion, wherein the first PRACH transmission occasion corresponds to analog beams of a wireless auxiliary device; and
a first sending module, configured to send a first message Msg1 on the first PRACH transmission occasion.

22. The apparatus according to claim 21, wherein the first determining module comprises:
a first obtaining submodule, configured to obtain a first transmission parameter, wherein the first transmission parameter is a relevant parameter of a synchronization signal block SSB and the wireless auxiliary device; and
a first determining submodule, configured to determine, in response to detecting a first SSB and based on the first transmission parameter, a first PRACH transmission occasion on which the analog beams correspond to the first SSB.

23. The apparatus according to claim 21, wherein the first determining module comprises:
a second obtaining submodule, configured to obtain, in response to detecting a second SSB, control resource set CORESET configuration information corresponding to the second SSB, wherein the CORESET configuration information is used for indicating a time-frequency resource of a CORESET; and
a second determining submodule, configured to detect a CORESET, and determine the first PRACH transmission occasion corresponding to the second SSB.

24. The apparatus according to claim 21, further comprising:
a first receiving module, configured to receive a second message Msg2 sent by a network side device, wherein the Msg2 is scrambled by using a random access radio network temporary identifier RA-RNTI, and the RA-RNTI is calculated based on a second PRACH transmission occasion;
in a case that the first PRACH transmission occasion comprises a plurality of PRACH transmission occasions, the second PRACH transmission occasion is a PRACH transmission occasion on which signal strength of a signal meets a preset condition among the plurality of PRACH transmission occasions; and
in a case that the first PRACH transmission occasion comprises one PRACH transmission occasion, the second PRACH transmission occasion is the first PRACH transmission occasion.

25. A transmission processing apparatus, comprising:
a second receiving module, configured to receive a Msg1 sent on a first PRACH transmission occasion, wherein
the first PRACH transmission occasion corresponds to analog beams of a wireless auxiliary device.

26. The apparatus according to claim 25, further comprising:
a second determining module, configured to determine a second PRACH transmission occasion;
a calculating module, configured to calculate an RA-RNTI based on the second PRACH transmission occasion; and
a second sending module, configured to scramble a Msg2 by using the RA-RNTI, and send the Msg2.

27. A terminal, comprising a processor, a memory, and a program or instructions stored in the memory and executable on the processor, wherein when the program or instructions are executed by the processor, steps of the transmission processing method according to any one of claims 1 to 14 are implemented.

28. A network side device, comprising a processor, a memory, and a program or instructions stored in the memory and executable on the processor, wherein when the program or instructions are executed by the processor, steps of the transmission processing method according to any one of claims 15 to 20 are implemented.

29. A readable storage medium, storing a program or instructions, wherein when the program or instructions are executed by a processor, steps of the transmission processing method according to any one of claims 1 to 14 are implemented, or steps of the transmission processing method according to any one of claims 15 to 20 are implemented.

30. A chip, comprising a processor and a communication interface, wherein the communication interface is coupled to the processor, and the processor is configured to run a program or instructions to implement the transmission processing method according to any one of claims 1 to 14, or implement the transmission processing method according to any one of claims 15 to 20.

31. A computer program product, wherein the computer program product is executed by at least one processor to implement the transmission processing method according to any one of claims 1 to 14, or implement the transmission processing method according to any one of claims 15 to 20.

32. A communication device, configured to implement the transmission processing method according to any one of claims 1 to 14, or implement the transmission processing method according to any one of claims 15 to 20.
